**Europäisches Patentamt**

**European Patent Office**

**Office européen des brevets**

(19)

(11) Publication number: **0 067 193**
**B1**

# EUROPEAN PATENT SPECIFICATION

(45) Date of publication of patent specification: **08.08.84**

(51) Int. Cl.³: **H 04 H 1/04, H 04 N 7/16**

(21) Application number: **82900158.5**

(22) Date of filing: **21.12.81**

(86) International application number:
**PCT/NL81/00028**

(87) International publication number:
**WO 82/02303 08.07.82 Gazette 82/17**

(54) **TELEDISTRIBUTION SYSTEM.**

(30) Priority: **22.12.80 NL 8006976**

(43) Date of publication of application:
**22.12.82 Bulletin 82/51**

(45) Publication of the grant of the patent:
**08.08.84 Bulletin 84/32**

(84) Designated Contracting States:
**AT BE CH DE FR GB LI LU NL SE**

(56) References cited:
**DE - A - 2 530 542**
**FR - A - 2 268 418**
**FR - A - 2 305 077**
**GB - A - 1 521 692**

**ICC'79 Conference Record, volume 3 of 4, International Conference on Communications, June 10-14, 1979 (Boston, US) J. Mendrik "Configuration of the local telecommunications network in the Netherlands, in particular the network for transmission of radio and television signals", pages 39.6.1. to 39.6.5 see page 39.6.3, left-hand column, paragraph 2 to end of page 39.6.5; figures**

(73) Proprietor: **DELTAKABEL B.V.**
**Bleulandweg 3 P.O. Box 2056**
**NL-2800 BE Gouda (NL)**

(72) Inventor: **De ROO, Minno**
**Ceasar Franckstraat 52**
**NL-2625 BZ Delft (NL)**

(74) Representative: **van der Beek, George Frans et al, Nederlandsch Octrooibureau Johan de Wittlaan 15 P.O. Box 29720**
**NL-2502 LS Den Haag (NL)**

Courier Press, Leamington Spa, England.

## Description

The invention relates to a teledistribution system, comprising an exchange with n signal inputs and m subscriber outputs, switching means in the exchange for each subscriber for supplying a signal from one of the signal inputs through a signal separating circuit to the related subscriber output, a cable connection between each subscriber output and each subscriber terminal and signal selecting means, which as the subscriber signal receiver are connected to said subscriber terminal and by means of which selecting signals can be transmitted through the cable connection and through said signal separating circuit to a control unit in the exchange for controlling the switching means assigned to the related subscriber.

Such teledistribution systems are for instance used in cable television systems for supplying a television program to a subscriber, which subscriber has selected said program out of a number of programs available in the exchange, but such systems can also be used for transmission of radio signals, data signals, etc. In the following reference is made to a cable television system however without restricting the scope of the invention thereto.

A known cable television system of the above mentioned type is described in FR—A—2,305,077. Each subscriber in this system can by means of program selecting means transmit a selecting signal to the exchange through the cable between his subscriber terminal and the exchange. This selecting signal received from the subscriber, is through a signal separating circuit supplied to the control unit which in turn controls the switching means assigned to the related subscriber in correspondence with said selecting signal. In this way it is possible for each subscriber to indicate through his program selecting means which of the available television programs he wants to receive and the control unit takes care that the switching means are controlled such that a connection is realized between that television signal input onto which the selected television program is presented, and the related subscriber output. Each television program is supplied to the switching means in a common frequency band or channel which is used for all programs. Irrespective of the television signal input to which the subscriber output is connected always a signal in the same band will appear at said subscriber output. In this prior art system a frequency band is used which cannot be received by a normal television receiver. Because preferably the subscribers are using normal television receivers, suited for receiving television signals in the UHF- and VHF-broadcasting bands, it is necessary to convert the signal, transmitted through the cable to the subscriber to a channel in the UHF- or VHF-band suitable for reception by a normal television receiver. Therefore in this known system it is necessary to install a frequency converter with a fixed frequency conversion ratio in each subscriber station, for instance into the subscribers wall socket.

This known system has a number of disadvantages.

In the first place a relatively expansive frequency converter is necessary for each subscriber, together with a corresponding power unit which had to fulfil strict requirements in relation to short circuit and overvoltage protection.

Furthermore because of the used common low frequency band for transmitting the television signals to the subscribers frequency equalizing measures are necessary for each subscriber terminal to avoid distortions.

It is furthermore not possible without further measures to receive a number of different television programs by means of a number of television receivers at the subscribers station because all programs are transmitted from the exchange through the cable in one and the same frequency band. That means that the subscriber appreciating the simultaneous reception of a number of different programs had to be provided with a number of terminals with corresponding cable connections between said terminals and the exchange and corresponding frequency converters between the subscribers ends of said cable connections and the related television receivers.

The object of the invention is now to embody the teledistribution system of the abovementioned type such, that said disadvantages are at least significantly eliminated.

Said object is according to the invention reached with a teledistribution system of the abovementioned type in that for each subscriber terminal a frequency converter with a fixed frequency conversion ratio is installed in the exchange between said switching means and said signal separation, which frequency converter converts the signals received through said switching means into a frequency band or channel which can be received by the subscriber signal receiver. Applying the invention to the cable televion system, used as example, the result thereof is that each program, selected by a subscriber, is in the exchange by said frequency converter converted to a channel, which can be received by a normal television receiver. The result thereof is that the signals, which are received by the subscriber through the cable, can be directly processed by the television receiver without the intervenience of a frequency converter. That means that the relatively expensive frequency converter and the corresponding power unit at the subscribers station are eliminated. Because furthermore signals of a much higher frequency are transmitted over the cable it is not necessary to carry out frequency equalization measures at the subscribers station.

A preferred embodiment of the teledistribution system according to the invention, used in a cable television system, in which through each subscriber terminal a number of signals can be received onto a corresponding number of signal receivers is characterized in that for each subscriber signal receiver connected to the subscriber terminal of one subscriber separate switching means are installed into the exchange connected by means of a coupling circuit to the signal separating circuit assigned to said subscriber, whereas separate signal selecting means are assigned to each of the signal receivers, which as said signal receivers are connected to the cable connection through a second coupling circuit, whereby between each of said separate switching means and the first coupling circuit in the exchange a frequency converter is installed for converting the signals received through said switching means to a frequency band or channel, for each signal receiver a different frequency band or channel, which can be received by the related signal receiver. In this embodiment it is therefore possible to transmit a number of programs over one and the same cable to the subscriber, whereby at the subscribers location only a coupling circuit having a signal separating function is necessary to supply each of the simultaneously received programs to a separate television receiver. If the television receivers are normal television apparatusses suitable for reception of the usual channels in the UHF and VHF band, then the second coupling circuit at the subscribers location may be reduced into a simple cable fork. It is in that case only necessary to provide for each television receiver separate switching means with corresponding frequency converter into the exchange.

The positioning of the frequency converters into the exchange has furthermore the advantage that it is possible to install a number of said frequency converters onto one single assembling board or print, resulting into a more efficient manufacturing of these circuits. In that case it is also not necessary to provide one power supply per frequency converter, but instead thereof one power supply may be used for powering all the frequency converters.

In the following an embodiment of the invention is, as example, described in more detail with reference to the accompanying figures.

Fig. 1 illustrates a cable television system according to the invention whereby to each subscribers terminal one television receiver is connected.

Fig. 2 illustrates a cable television system according to the invention whereby it is possible to receive a number of television programs through one and the same subscriber terminal onto a corresponding number of receivers.

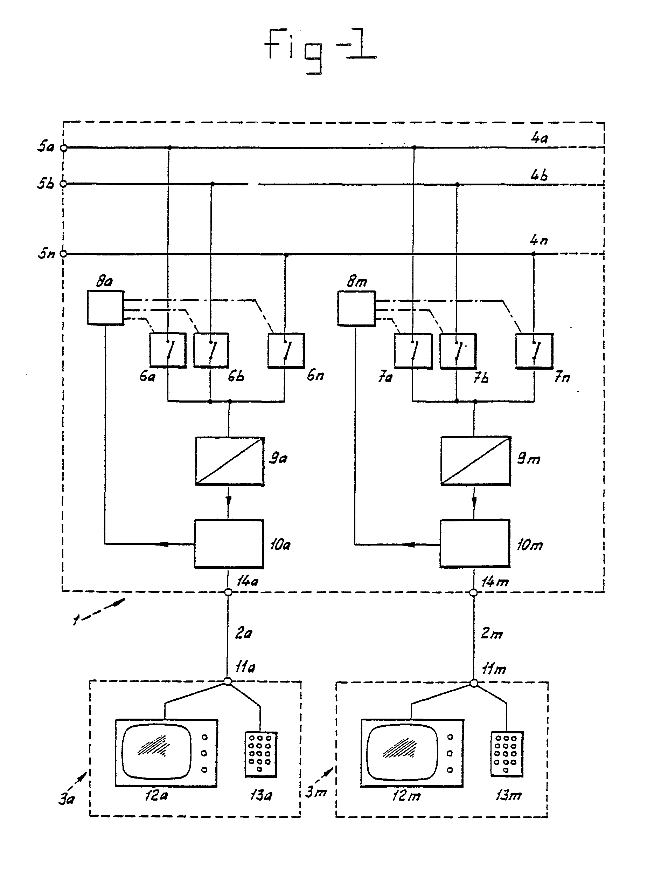

Fig. 1 illustrates a cable television system according to the invention comprising an exchange 1, to which a number of subscriber circuits 3a ... 3m is connected through cables 2a ... 2m. The exchange has a number of program lines 4a, 4b, ... 4n, each at the left hand side in Fig. 1 connected to a television signal input 5a, 5b ... 5n. For each subscriber a group of switching means is installed into the exchange. Two of such groups of switching means, assigned to the subscribers 3a and 3m are illustrated in Fig. 1. The switching means assigned to the subscriber 3a are symbolically indicated by means of the switches 6a, 6b ... 6n. The switching means assigned to the subscriber 3m are symbolically indicated by means of the switches 7a, 7b, ... 7n. Each group of switching means is controlled by a control unit 8a ... 8m. The outputs of said switching means 6a, 6b ... 6n are intercoupled and commonly connected to the input of a frequency converter 9a. In the same way the outputs of the switching means 7a, 7b ... 7n are interconnected and communly connected to the frequency converter 9m. In the frequency converters 9a ... 9m the signals received through said switching means are converted to a standard television channel frequency for instance in the UHF- or VHF-band suitable for direct reception by a normal television set. The output signal of each frequency converter 9a ... 9m is supplied to a signal separating circuit 10a ... 10m and is from there transmitted via the cable connections 2a ... 2m to the respective subscribers 3a ... 3m. Each subscriber has a subscriber terminal 11a ... 11m from which connections are running on the one hand to a normal television receiver 12a ... 12m and on the other hand to program selecting means 13a ... 13m. Said selecting means 13a ... 13m are for instance embodied in the form of a key board having a number of keys corresponding to the available number of television programs or are embodied in the form of a numerical key board having numerical keysons by means of which a number can be keyed in to indicate the desired television program. The actual embodiment of said program selecting means is however in relation to the underlying application not important.

The switching means 6a ... 6m and 7a ... 7m and also the other switching means for all the other subscribers can be embodied using mechanical switches controlled by the related control units 8a ... 8m, but it will be clear, that in most cases electronic switches will be preferred. Also in this case the actual embodiment of the switching means is not important for the underlying application.

The frequency converters 9a ... 9m are known themselves and to not need further explanation.

The signal separating circuits 10a ... 10m may be embodied as filter circuits for transmitting television signals from the frequency convertors 9a ... 9m to the subscriber outputs 14a ... 14m of the exchange, whereas in the other direction selecting signals received from the subscribers outputs 14a ... 14m and generated by the program selecting means at the subscribers locations, are transferred to the related control unit 8a ... 8m.

If necessary the subscriber terminals 11a ... 11m can comprise filter circuits by means of which television signals are transferred from the cable connection 2a ... 2m to the related television set 12a ... 12m, whereas in the other direction selecting signals are transferred from the selecting means 13a ... 13m to the cable connection 2a ... 2m.

The television system illustrated in Fig. 1 operates as follows. Though the television signal inputs 5a ... 5n of the exchange continuously the available television programs are supplied to the lines 4a ... 4n. Through the branches of said lines leading to the switching means said television programs are supplied to the switching means such as 6a ... 6n and 7a ... 7n. Now the subscriber 3a transmits by means of his program selecting means selecting signals through the subscriber terminal 11a, the cable connection 2a, the subscriber output 14a and the signal separating circuit 10a to the control unit 8a. Therein the received selecting signals are decoded and one of the switching means 6a ... 6n is activated to realize a connection between that specific signal input 5a ... 5n onto which the selected program is offered, and the input of the frequency convertor 9a. In said frequency converter 9a the received television program is converted from the reception frequency band to a standard television channel in the UHF-band. This frequency converted signal is supplied through the signal separating circuit 10a to the subscriber output and from there transmitted via the cable connection 2a to the subscriber terminal 11a. From the subscriber terminal 11a the television signal is supplied to the receiver 12a.

When the subscriber wants to select another program it is sufficient to operate the program selecting means for transmitting the corresponding selecting signals to the control unit 8a, which in turn functions such that the specific switching means, which was until then activated, is brought back into the inactive position and another switching means, corresponding to the selected program, is activated.

Because the circuits assigned to the subscriber 3m and to the other subscribers are completely identical to the circuits assigned to the subscriber 3a, these circuits will not be discussed herein detail.

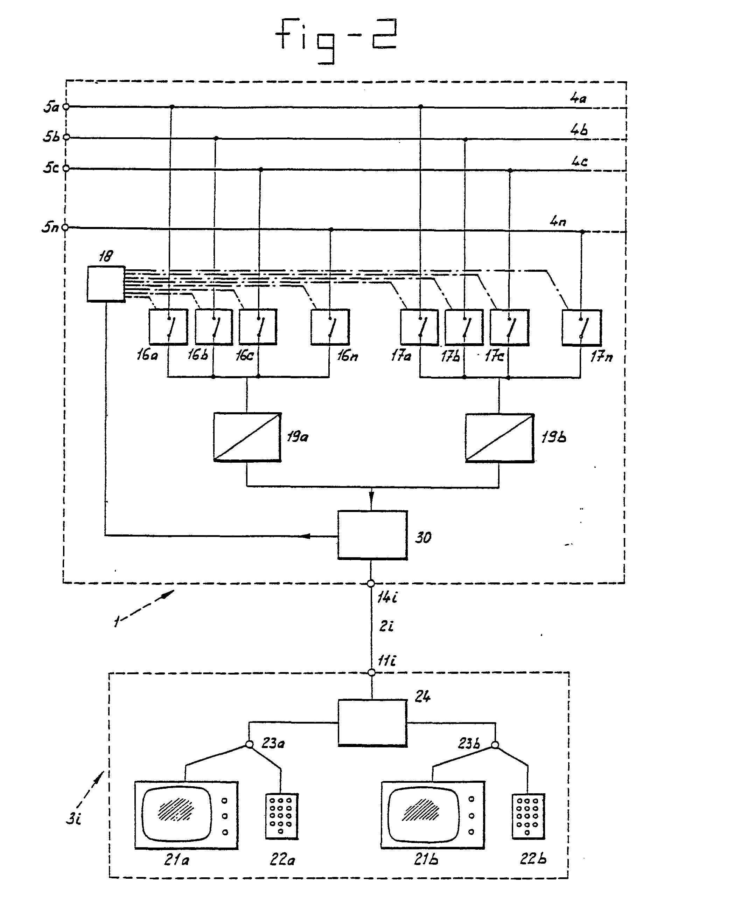

Fig. 2 illustrates a further embodiment of this television system, in which it is possible to connect a number of television sets to one subscriber terminal and to receive on each set an independent selectable program. For the sake of clearness only the circuits corresponding to one single subscriber 3i are shown. In the illustrated embodiment said subscriber has two television sets 21a and 21b with corresponding program selecting means 22a and 22b.

These television apparatusses are as the corresponding program selecting means connected to an apparatus connection 23a respectively 23b and from these apparatus connections lines are running to the signal separating circuit 24. Also in this case the exchange comprises program lines 4a, 4b, 4c ... 4n, which are on the one hand connected to the television signal inputs 5a, 5b, 5c ... 5n through which the available programs are supplied. The switching means 16a, 16b, 16c ... 16n and 17a, 17b, 17c ... 17n are through branches in the illustrated manner connected to the program lines 4a ... 4n, each switching means to one program line. The switching means 16a ... 16n, 17a ... 17n are in this embodiment controlled in common by one control unit 18. The outputs of the switching means 16a ... 16n are interconnected and in common connected to the frequency converter 19a, whereas the outputs of the switching means 17a ... 17n are interconnected and in common connected to the input of the frequency converter 19b. The outputs of said frequency converters 19a and 19b are interconnected and in common connected to the signal separating circuit 30, from which the output signal of the exchange is supplied via the subscriber output 14i and the cable connection 2i to the subscriber 3i.

This further embodiment of the system according to the invention operates as follows. When the subscriber for instance likes to receive on the television receiver 21a the program, which is offered on the television signal input 5b, then he operates the program selecting means 22a in the suitable way, for instance by pressing a key corresponding to the program on the television signal input 5b. A selecting signal is then transmitted from the program selecting means through the apparatus connection 23a, the signal separating circuit 24, the subscriber terminal 11i, the cable connection 2i, the subscriber output 14i and the signal separating circuit 30 to the control unit 18. Said control unit has in comparison with the control units 8a ... 8n in the embodiment illustrated in Fig. 1 a more extended function. Said control unit not only has to control the group of switching means 16a ... 16n, but also has to control the further group of switching means 17a ... 17n. In the first place said control unit 18 has to be able to distinguish between the groups of switching means for which the received selecting signal is destined, and thereafter one of the switching means out of this group has to be activated. In the underlying example said control unit 18 will select the group of switching means 16a ... 16n and of this group will activate the switching means 16b. The result thereof is a connection between the television signal input 5b and the input of the frequency converter 19a. In this converter 19a the received television signal is transferred to a channel in the normal UHF- or VHF-band and thereafter transmitted through the signal separating circuit 30, the subscriber output 14i, the cable connection 2i and the subscriber terminal 11i to the signal separating circuit 24. Said signal separating circuit 24 distinguishes in this example between signals received from the frequency converter 19a and signals received from the frequency converter 19b because both converters are transferring the received television signals to another channel. The frequency converter 19a, for instance converts the received television signals to channel 2, whereas the frequency converter 19b converts the received signals for instance to channel 3. In the signal separated circuit 24 all the signals received in channel 2 are supplied to the apparatus connection 23a, whereas all the signals received in channel 3 are supplied to the apparatus connection 23b. In this way the program selected by means of the switching means 16b and converted by means of the converter 19a is supplied to the apparatus connection 23a and from there received by the television receiver 21a. Simultaneous therewith it is possible to select a program by means of the program selecting means 23b for reception onto the television receiver 21b. Said selecting signals are in the same way as above described transferred to the control unit 18 where the decision is taken that these signals are destined to control the switching means 17a . . . 17m and thereafter one of said switching means, for instance 17c is activated. The program received from the television signal input 5a is then through said switching means 17c supplied to the frequency converter 19b and therein converted (in this example) to channel 3. The television signals are then through the signal separating circuit 30, the subscriber output 14i, the cable connection 2i and the subscriber terminal 11i transferred to the signal separating circuit 24. Because the signals are received in channel 3 these signals are supplied to the apparatus connection 23b and are from there received by the receiver 21b.

Because television receivers for normal use have tuning units, which only will pass one signal channel it will be clear, that when using such normal television sets the signal separating circuit 24 may be reduced to a simple cable branch.

Although in Fig. 2 an embodiment is illustrated in which per subscriber two television sets can be installed for independently receiving different programs through one and the same subscriber terminal, it will be clear that this number can be extended to an arbitrary number, whereby for each television set a group of switching means has to be present in the exchange with a thereto corresponding frequency converter. All frequency converters which are through a signal separating circuit connected to one subscriber output have to convert the received programs into a different channel. The signal separating circuit 24 at the subscriber location has to be able to distinguish the different channels to supply the correct signals to the related apparatus connection, unless as is already above mentioned the channel tuning is carried out in the television apparatusses themselves in which case the signal separating circuit may be reduced into a cable branch.

Furthermore it will be clear, that the control unit 18 can be subdivided into a number of separate control units related each to a group of switching means, whereby the selecting signals for instance contain an identification signal to indicate which of the control units should be turned on to activate one of the switching means of the corresponding group of switching means on the basis of the received selecting signals.

It is also possible to use only one adapted key board per subscriber or to use otherwise embodied selecting means for selecting the programs to be received by each of the television receivers at the subscribers location. Said key board may in that case comprise keys by means of which first the apparatus is identified and thereafter are used for selecting the program to be received onto said apparatus.

In the teledistribution system according to the invention it is possible to connect each subscriber through one single cable connection to the exchange whereby each subscriber has the possibility, provided that the exchange is suitably adapted, to install one or more television receivers for receiving simultaneously different programs.

## Claims

1. Teledistribution system comprising an exchange (1) with n signal inputs (5a . . . 5n) and m subscriber outputs (14a . . . 14m), switching means (6, 7, 16, 17) in the exchange (1) for each subscriber (3) for supplying a signal from one of the signal inputs through a signal separating circuit (10, 30) to the related subscriber output, a cable connection (2) between each subscriber output (14) and each subscriber termnal (11) and signal selecting means (13, 22), which as the subscriber signal receiver (12, 21) are connected to said subscriber terminal and by means of which selecting signals can be transmitted through the cable connection and through said signal separating circuit to a control unit (8, 18) in the exchange (1) for controlling the switching means assigned to the related subscriber, characterized in that for each subscriber terminal (11) a frequency converter (9, 19) with a fixed frequency conversion ratio is installed in the exchange (1) between said switching means (6, 7, 16, 17) and said signal separating circuit (10, 30) which frequency converter converts the signal received through said switching means to a frequency band or channel which can be received by the subscriber signal receiver (12, 21).

2. Teledistribution system according to claim 1, whereby through each subscriber terminal (11) a number of signals can be received onto a corresponding number of signal receivers (21), characterized in that for each subscriber signal receiver (21a, 21b) connected to the subscriber terminal (11i) of one subscriber (3i) separate switching means (16i, 17i) are installed into the exchange connected by means of a coupling circuit to the signal separating circuit (30) assigned to said subscriber, whereas separate signal selecting means (22a, 22b) are assigned to each of the signal receivers (21a, 21b), which as said signal receivers are connected to the cable connection (2i) through a second coupling circuit (24), whereby between each of said separate switching means and the first coupling circuit in the exchange a frequency converter (19a, 19b) is installed for converting the signals received through said switching means to a frequency band or channel, for each signal receiver (21a, 21b) a different frequency band or channel, which can be received by the related receiver.

## Revendications

1. Dispositif de télédistribution comprenant un central (1) pourvu de n entrées pour signaux (5a . . . 5n) et de m sorties pour abonnés (14a . . . 14m) des moyens de commutation (6, 7, 16, 17) dans le central (1) pour chaque abonné (3) pour délivrer à la sortie de l'abonné concerné, par l'intermédiaire d'un circuit séparateur de signaux (10, 30), un signal provenant de l'une des entrées de signaux, une connexion par câble (2) entre chaque sortie pour abonné (14) et chaque borne d'abonné (11), et des moyens de sélection de signal (13, 22) qui sont reliés, comme le récepteur de signaux de l'abonné (12, 21), à la borne de l'abonné et grâce auxquels des signaux de sélection peuvent être transmis par le câble de liaison et par l'intermédiaire du circuit séparateur de signaux à une unité de commande (8, 18) située dans le central (1) et qui commande les moyens de commutation assignés à l'abonné concerné, caractérisé en ce que, pour chaque borne d'abonné (11), un convertisseur de fréquence (9, 19) à rapport de conversion fixe est installé dans le central (1) entre les moyens de commutation (6, 7, 16, 17) et le circuit séparateur de signaux (10, 30), ce convertisseur de fréquence transformant le signal reçu par l'intermédiaire des moyens de commutation pour l'amener dans une bande de fréquence, ou canal, susceptible d'être reçue par le récepteur de signaux de l'abonné (12, 21).

2. Dispositif de télédistribution selon la revendication 1, grâce auquel, plusieurs signaux peuvent être reçus par l'intermédiaire de chaque borne d'abonné (11), sur un nombre correspondant de récepteurs de signaux (21), caractérisé en ce que, pour chaque récepteur de signaux d'abonné (21a, 21b) connecté à la borne d'abonné (11i) d'un abonné (3i) des moyens de commutation distincts (16i, 17i) sont installés dans le central et connectés grâce à un circuit de couplage au circuit séparateur de signaux (30) assigné à cet abonné, tandis que des moyens de sélection de signal distincts (22a, 22b) sont assignés à chaque récepteur de signaux (21a, 21b) et reliés, comme les récepteurs de signaux, au câble de liaison (2i) par un second circuit de couplage (24), de sorte qu'entre chacun des moyens de commutation distincts et le premier circuit de couplage dans le central un convertisseur de fréquence (19a, 19b) est installé pour convertir les signaux reçus par l'intermédiaire des moyens de commutation en les amenant dans une bande de fréquence, ou canal, différente pour chaque récepteur de signaux (21a, 21b), susceptible d'être reçue par le récepteur de signaux correspondant.

## Patentansprüche

1. Televerteilersystem, mit einer n Signaleingänge (5a ... 5n) und m Teilnehmerausgänge (14a ... 14m) aufweisenden Vermittlungsstelle (1), einer in der Vermittlungsstelle (1) für jeden Teilnehmer (3) vorgesehenen Schaltanordnung (6, 7, 16, 17), um von einem der Signaleingänge über eine Signal-Separierschaltung (10, 30) an den zugehörigen Teilnehmerausgang ein Signal zu leiten, einer Kabelverbindung (2) zwischen jedem Teilnehmerausgang (14) und jedem Teilnehmeranschluß (11), und einer Signal-Wähleinrichtung (13, 22), die wie der Teilnehmer-Signalempfänger (12, 21) an den Teilnehmeranschluß angeschlossen ist, und mit deren Hilfe Auswählsignale über die Kabelverbindung und die Signal-Separierschaltung an eine in der Vermittlungsstelle (1) vorgesehene Steuereinheit (8, 18) gesendet werden können, um die dem jeweiligen Teilnehmer zugeordnete Schaltanordnung zu steuern, dadurch gekennzeichnet, daß für jeden Teilnehmeranschluß (11) ein ein festes Frequenz-Umwandlungsverhältnis aufweisender Frequenzwandler (9, 19) in der Vermittlungsstelle (1) zwischen der Schaltanordnung (6, 7, 16, 17) und der Signal-Separierschaltung (10, 30) installiert ist, und daß der Frequenzwandler das über die Schaltanordnung empfangene Signal in ein Frequenzband oder einen Kanal umsetzt, das bzw. der von dem Teilnehmer-Signalempfänger (12, 21) empfangen werden kann.

2. Televerteilersystem nach Anspruch 1, bei dem über jeden Teilnehmeranschluß (11) eine Anzahl von Signalen an einer entsprechenden Anzahl von Signalempfängern (21) empfangen werden kann, dadurch gekennzeichnet, daß für jeden an den Teilnehmeranschluß (11i) eines Teilnehmers (3i) angeschlossenen Teilnehmer-Signalempfänger (21a, 21b) separate Schaltvorrichtungen (16i, 17i) in der Ver-

mittlungsstelle (1) vorgesehen sind, welche mit Hilfe einer Kopplungsschaltung an die dem Teilnehmer zugeordnete Signal-Separierschaltung (30) angeschlossen sind, wobei separate Signal-Wähleinrichtungen (22a, 22b) jedem der Signalempfänger (21a, 21b) zugeordnet sind, die als Signalempfänger über eine zweite Kopplungsschaltung (24) an die Kabelverbindung (2i) angeschlossen sind, wobei zwischen jeder der separaten Schaltvorrichtungen und der ersten Kopplungsschaltung in der Vermittlungsstelle ein Frequenzwandler (19a, 19b) vorgesehen ist, um die über die Schaltvorrichtung empfangenen Signale für jeden Signalempfänger (21a, 21b) in ein verschiedenes Frequenzband oder einen verschiedenen Kanal umzusetzen, das bzw. der von dem zugehörigen Empfänger empfangen werden kann.

## Fig-1

# Fig-2